# EUROPÄISCHE PATENTSCHRIFT

(11) **EP 3 891 325 B1**
(45) Veröffentlichungstag und Bekanntmachung des Hinweises auf die Patenterteilung: **07.06.2023**
(21) Anmeldenummer: 19828571.0
(22) Anmeldetag: 04.12.2019
(51) Int. Cl.: D04H 3/013

(54) **VERFAHREN ZUR LÖSUNGSMITTEL- UND CELLULOSERÜCKGEWINNUNG BEI DER HERSTELLUNG VON CELLULOSISCHEN SPINNVLIESEN**
METHOD FOR SOLVENT AND CELLULOSE RECOVERY IN THE PRODUCTION OF CELLULOSE NON-WOVEN FABRIC
PROCÉDÉ DE RÉCUPÉRATION DE SOLVANT ET DE CELLULOSE LORS DE LA FABRICATION DE TISSUS NON-TISSÉS CELLULOSIQUES

(30) Priorität: 05.12.2018 EP 18210510
(43) Veröffentlichungstag der Anmeldung: 13.10.2021
(73) Patentinhaber: Lenzing Aktiengesellschaft, 4860 Lenzing (AT)
(72) Erfinder: SAGERER-FORIC, Ibrahim, 4840 Vöcklabruck (AT); MALZNER, Markus, 4841 Ungenach (AT); LICHTENTHAL, Martin, 4864 Attersee (AT)
(74) Vertreter: Schwarz & Partner Patentanwälte GmbH
(86) Internationale Anmeldenummer: PCT/EP2019/083693
(87) Internationale Veröffentlichungsnummer: WO 2020/115142

(56) Entgegenhaltungen:
- WO-A1-2018/184039
- WO-A1-2020/016296
- US-A- 3 884 907
- US-A1- 2014 008 577
- US-B2- 8 366 988

## Beschreibung

Die vorliegende Erfindung betrifft eine Anlage zur Herstellung von Spinnvlies, umfassend ein Spinnsystem, eine Vorrichtung zur Abgabe von Koagulationsflüssigkeit, wenigstens eine Fördereinrichtung zur Ablage des Spinnvlieses und eine Sammelvorrichtung für das Spinnvlies. Die Erfindung betrifft außerdem ein Verfahren zur Rückgewinnung von Lösungsmittel oder Cellulose in einer Anlage zur Herstellung von Spinnvlies, wobei aus einem Spinnsystem Spinnmassefilamente extrudiert, verstreckt zu einem Spinnvlies abgelegt und später gesammelt werden.

### Hintergrund der Erfindung

Seit vielen Jahren werden Spinnvliese nach dem Spunbond- oder nach dem Meltblown-Verfahren hergestellt. Beim Spunbond-Verfahren, wie beispielsweise in GB 2 114 052 und EP 3 088 585 beschrieben, werden Filamente durch eine Düse extrudiert und durch eine darunterliegende Verstreckungseinheit abgezogen und verstreckt. Im Gegensatz dazu, werden die extrudierten Filamente beim Meltblown-Verfahren, wie beispielsweise in US 5,080,569, US 4,380,570 und US 5,695,377 beschrieben, bereits beim Austritt aus der Düse von heißer, schneller Prozessluft mitgerissen und verstreckt.

Bei beiden Technologien werden die Filamente auf einer Ablagefläche, beispielsweise einem perforierten Förderband in Wirrlage zu einem Vliesstoff abgelegt, zu Nachbearbeitungsschritten transportiert und schließlich als Vliesrollen aufgewickelt.

Die bekannten Verfahren und Vorrichtungen sind hauptsächlich für die Herstellung von Kunststofffilamenten wie beispielsweise Polypropylen entwickelt worden und die bisherigen Veröffentlichungen beschäftigen sich hauptsächlich mit den Düsen, dem verwendeten Rohmaterial und den für die Vliesablage notwendigen Ablagesystemen. Tatsächlich erfordert der wirtschaftlich sinnvolle und sicherheitskonforme Betrieb von Produktionsanlagen eine genauere Betrachtung der Betriebszustände bei Spinnvliesanlagen. Beim Anfahren von thermoplastischen Spinnvliesanlagen werden beispielsweise die extrudierten Filamente entweder durch eine Vorrichtung unter dem Spinnsystem aufgefangen und entsorgt, oder auf ein so genanntes Trägervlies abgelegt. Da das Trägervlies vor der Vliesablage abgerollt wurde, wird einerseits das Förderband vor Beschädigung durch heiße Filamente geschützt und andererseits werden auch die frisch extrudieren Filamente bereits über die nachgeschalteten Verfestigungs- und ggf. Trocknungsvorrichtungen transportiert und aufgewickelt. Einerseits wird verhindert, dass das Ablageförderband beim Anspinnen durch die heißen Filamente beschädigt wird und andererseits passiert das Einfädeln des Spinnvlieses automatisch. Sobald die gewünschte Spinnvliesqualität erreicht ist, wird das Trägervlies vor der Ablage des Spinnvlieses abgeschnitten bzw. abgerissen. Das Spinnvlies wird dann direkt und unmittelbar auf der Ablagefläche abgelegt. Bevor die Anlage abgestellt wird, wird das Trägervlies wieder abgerollt, um den bereits beschriebenen Anfahrvorgang beim nächsten Anfahren wiederholen zu können. Bei bekannten Spinnvliesanlagen für thermoplastische Spinnvlies wird beim Anfahren, Abstellen und bei Problemen während der Spinvliesherstellung besonderes Augenmerk auf den Umgang mit der heißen Schmelze und dem Schutz der Fördervorrichtung gelegt.

Im Gegensatz zu den bereits sehr gut bekannten Spundbond- und Meltblown-Verfahren für Thermoplaste, muss der Vliestransport für die Herstellung von cellulosischen Spinnvliesen, beispielsweise aus Lyocell-Spinnmasse, zusätzliche Aufgaben lösen. Die Herstellung von cellulosischen Spinnvliesen mit der Spundbond-Technologie ist beispielsweise in US 8,366,988 und nach der Meltblown-Technologie in US 6,358,461 und US 6,306,334 beschrieben. Bei diesen Verfahren wird die Lyocell-Spinnmasse wie bei den bereits bekannten Spundbond- und Meltblownverfahren verstreckt, aber die Filamente werden zusätzlich vor der Vliesablage mit einem Koagulationsmittel in Kontakt gebracht, um die Cellulose zu regenerieren und formstabile Filamente zu erzeugen. Die nassen Filamente werden durch die Turbulenz der Luft in Wirrlage als Vliesstoff abgelegt.

Für die Herstellung von cellulosischen Spinnvliesen werden Lösungsmittel verwendet, welche rückgewonnen werden müssen. Außerdem sind die hergestellten Spinnmassen bspw. Lyocell-Spinnmassen brennbar und können Schäden bei nachgeschalteten Anlagenteilen verursachen, sodass die An- und Abstellprozedur nicht wie bei thermoplastischen Spinnvliesanlagen erfolgen kann. Die anfangs noch groben, heißen Spinnmassefilamente können nicht einfach auf ein Trägervlies abgelegt und über den Trockner bis zum Wickler transportiert werden. Es hat sich gezeigt, dass beim Hochfahren der Anlage, speziell bei geringen Verstreckungsluftmengen, die extrudieren Filamente noch so grob sind, dass sie sogar nach dem in WO 2018/071928 A1 beschriebenen Waschverfahren, so hohe Lösungsmittelrückstände aufweisen, dass bei der Weiterverarbeitung des Spinnvlieses Lösungsmittel verloren geht. Nachgeschaltete Anlagenteile wie die in AT 503 625 beschriebene Wasserstrahlverfestigung, Trockner und Wickler werden außerdem verschmutzt und korrodieren durch das Lösungsmittel. Im Extremfall kann das Lösungsmittelbeladene Spinnvlies zum größten Teil noch aus Spinnmasse bestehen und im Trockner zu Brennen beginnen.

Der Verlust des Lösungsmittels und durch Korrosion und Brand beschädigte Anlagenteile stellen ein erhebliches wirtschaftliches Risiko dar. Speziell bei der Herstellung von cellulosischen Spinnvliesen soll der Verlust des Lösungsmittels und der Kontakt des Lösungsmittels mit nachgeschaltetem Equipment aus sicherheitstechnischen, wirtschaftlichen und umwelttechnischen Gründen vermieden werden.

Wie bereits erwähnt liegt der Fokus der bisherigen Veröffentlichungen für Verfahren zur Herstellung thermoplastischer Spinnvliese (wie in US 3,849,241 beschrieben) hauptsächlich auf den für Meltblown und Spunbond verwenden Spinnsystemen. In US 6,358,461 und US 8,282,877 wird zwar die Herstellung cellulosischer Spinnvliese beschrieben und in US 8,366,988 werden auch Details zur Rohmaterial- und Produktführungen angegeben, doch gibt der Stand der Technik keine Auskunft über die Fahrweise beim Anfahren und Abstellen der Anlage, bei Produktionsproblemen und über die Rückgewinnung von Lösungsmittel und Cellulose während des Betriebs einer cellulosischen Spinnvliesanlage.

### Kurzbeschreibung der Erfindung

Aufgabe der vorliegenden Erfindung ist es daher, die zuvor beschriebenen Nachteile zu vermeiden. Insbesondere soll bei der eingangs genannten Anlage und beim eingangs genannten Verfahren der Verlust an Lösungsmittel minimiert und die Betriebssicherheit nachgeschalteter Anlagenteile gewährleistet werden.

Die Aufgabe wird gelöst durch eine Anlage zur Herstellung von Spinnvlies, umfassend
- eine Spinnlösungsherstellung,
- ein Spinnsystem,
- eine Vorrichtung zur Abgabe von Koagulationsflüssigkeit,
- wenigstens eine Fördereinrichtung zur Ablage des Spinnvlieses und
- eine Sammelvorrichtung für das Spinnvlies,
dadurch gekennzeichnet, dass zwischen der Vorrichtung zur Abgabe von Koagulationsflüssigkeit und der Sammelvorrichtung für das Spinnvlies zumindest eine Ausschleusvorrichtung vorgesehen ist.

Weiters wird die Aufgabe gelöst durch ein Verfahren zur Rückgewinnung von Lösungsmittel oder Cellulose in einer Anlage zur Herstellung von Spinnvlies, wobei aus einem Spinnsystem Spinnmassefilamente extrudiert, verstreckt zu einem Spinnvlies abgelegt und später gesammelt werden, wobei beim Anfahren der Anlage, beim Abstellen der Anlage oder bei Betriebsproblemen der Anlage abgelegtes Spinnvlies vor dem Sammeln ausgeschleust wird, wobei (a) dem ausgeschleusten Spinnvlies das Lösungsmittel entzogen wird und/oder wobei (b) das ausgeschleustes Spinnvlies der Spinnlösungsherstellung zugeführt wird.

Um das Lösungsmittelbeladene Spinnvlies beim Anfahren, Abstellen, oder bei Betriebsproblemen während der Produktion (Spinnfehler, Ansammlung von groben Fasern, Spinnvlies besteht noch aus Spinnmasse,...) auszuschleusen und um das Lösungsmittel rückgewinnen zu können, sowie Verschmutzung und bspw. Brandgefahr in der Wasserstrahlverfestigung, einer Trockeneinrichtung oder der Sammelvorrichtung zu vermeiden, erfüllt die erfindungsgemäße Anlage die zusätzliche Aufgabe, dieses Lösungsmittelbeladene Spinnvlies, welches nicht die gewünschten Eigenschaften aufweist, auszuschleusen und dem Produktionsprozess wieder zuzuführen.

Am Beispiel der Spinnvliesherstellung aus Lyocell-Spinnmasse hat sich gezeigt, dass die ausgeschleusten Spinnvliestücke in der NMMO-Rückgewinnung weiteren Reinigungsschritten zugeführt und anschließend beispielsweise filtriert, dekantiert, gepresst oder zentrifugiert werden können, sodass wieder eine NMMO-Lösung entsteht, welche gereinigt, eingedampft und der Spinnmasseherstellung zugegeben werden kann. Erfindungsgemäß konnte NMMO, welches beim Anfahren und Abstellen der Anlage oder bei Produktionsproblemen verloren gegangen wäre, gezielt aus der Produktionsanlage ausgeschleust und in weiterer Folge rückgewonnen werden. Es hat sich gezeigt, dass die zurückbleibende Cellulose nach der Fest/Flüssig-Trennung, anstatt entsorgt zu werden, auch wieder zur Spinnmasseherstellung verwendet werden kann.

Ein weiterer Vorteil des erfindungsgemäßen Verfahrens ist neben dem wirtschaftlich und umwelttechnisch verbesserten Betrieb der Spinnvliesanlage aufgrund der Lösungsmittel- und Celluloserückgewinnung, der Schutz der nachgeschalteten Anlagenteile. Da das lösungsmittelbeladene Spinnvlies nach der Transportvorrichtung oder nach der Waschvorrichtung oder nach der Verfestigungsvorrichtung ausgeschleust wird, kann verhindert werden, dass das brennbare Lösungsmittel bzw. die Spinnmasse mit der heißen Trockneroberfläche einer Trockeneinrichtung in Kontakt kommt.

Wenn das Spinnvlies vor der Verfestigung mit Wasserstrahl ausgeschleust wird, kann auch verhindert werden, dass Lösungsmittel in den Wasserkreislauf der Wasserstrahlverfestigung gelangt, welches an dieser Stelle Korrosion der Anlagenteile und der Düsenstreifen verursachen kann.

Als weiterer Vorteil erweist sich die Möglichkeit, das Spinnvlies an mehreren Stellen beim Anfahren und beim Abstellen der Anlage ausschleusen zu können, aber auch bei Produktionsstörungen, insbesondere bei hohen Geschwindigkeiten. Falls sich das Spinnvlies beispielsweise bei der Wasserstrahlverfestigung um eine Vakuumtrommel oder um eine Umlenkwalze wickelt, kann das Spinnvlies davor abgerissen und ausgeschleust werden, die Geschwindigkeit der Wasserstrahlverfestigung reduziert, die Verwicklung beseitigt und die Anlage wieder hochgefahren werden, ohne den ganzen Spinnprozess oder gar die Spinnmasseherstellung stoppen zu müssen. Speziell bei der Herstellung von cellulosischen Spinnvliesen hat sich herausgestellt, dass die Spinnmasseherstellung konstant betrieben werden soll, um gleichmäßige Produktqualität zu erreichen. Durch das erfindungsgemäße Verfahren konnten Stillstandzeiten minimiert werden, da Einstellungen an nachgeschalteten Anlagenteilen vorgenommen werden können, ohne dass das Spinnmassesystem und das Spinnsystem abgeschaltet oder gedrosselt werden müssen. Einzig die Geschwindigkeiten der Transportvorrichtung werden angepasst, das Spinnvlies wird vor dem Anlagenteil, an welchen Arbeiten durchgeführt werden, ausgeschleust und das NMMO wird aus dem ausgeschleusten Spinnvlies - wie bereits beschrieben - rückgewonnen, oder das ausgeschleuste Spinnvlies wird suspendiert und direkt der Spinnmasseherstellung zurückgeführt.

Im Rahmen der Erfindung wird zu einfacheren Beschreibung unter Spinnvlies im Normalbetrieb einerseits eine nicht gewebte Struktur aus regenerierten und gegebenenfalls an Kreuzungsstellen verklebten Cellulose-Filamenten im Bereich von 0,1 µm bis 250 µm Filamentdurchmesser und mit < 500 mg/kg Lösungsmittel verstanden. Andererseits wird unter Spinnvlies beim Anfahren, Abstellen oder bei Produktionsstörungen ein Flächengebilde aus teilweise oder gar nicht regenerierten Spinnmassefilamenten mit 0,1 bis 50.000 µm Durchmesser und mit einer Lösungsmittelkonzentration > 500 mg/kg bis zu einigen Millionen mg/kg verstanden. Der tatsächliche Zustand kann sich je nach Fahrweise auch zwischen den zwei genannten Beispielen befinden.

Hinsichtlich der Anlage ergeben sich zahlreiche vorteilhafte Ausführungsvarianten.

Die extrudierten Spinnmassefilamente oder auch bereits regenerierte Filamente können nach der Ablage entgegen der Transportrichtung ausgeschleust werden. Wenn die Spinnmasse noch nicht die gewünschte Qualität hat oder wenn Probleme bei nachgeschalteten Transportvorrichtungen beseitigt werden müssen, kann die Ausschleusung gleich nach der Extrusion aus dem Spinnsystem bzw. vor der Transportvorrichtung stattfinden, in dem die Transportvorrichtung rückwärts gefahren wird.

Die Anlage kann weiters zumindest eine Waschanlage aufweisen, wobei zwischen der Transportvorrichtung und der Waschanlage eine Ausschleusvorrichtung vorgesehen ist.

Die Anlage kann weiters zumindest eine Verfestigungsanlage aufweisen, wobei zwischen der Transportvorrichtung und der Verfestigungsanlage eine Ausschleusvorrichtung vorgesehen ist.

Die Anlage kann weiters eine Trockeneinrichtung aufweisen, wobei zwischen der Transportvorrichtung bzw. der davor geschalteten Verfestigungsanlage und der Trockeneinrichtung eine Ausschleusvorrichtung vorgesehen ist.

Die Anlage kann weiters eine Ausschleusvorrichtung nach der Trockeneinrichtung aufweisen.

Bevorzugt ist vorgesehen, dass die Transportvorrichtung mehrteilig ist und zwischen zwei Teilen der Transportvorrichtung eine Ausschleusvorrichtung vorgesehen ist. So kann die Transportvorrichtung z.B. ein Förderband sein. Im einfachsten Fall handelt es sich um ein mehrteiliges Förderband, wobei zwischen zwei Förderbandteilen die Ausschleusvorrichtung angeordnet ist.

Im einfachsten Fall kann die Ausschleusvorrichtung eine Öffnung zum Hindurchfallen des Spinnvlieses aufweisen. In einer Ausführungsvariante ist die Ausschleusvorrichtung als ein Schacht unter dem Spalt zwischen Teilen der Transportvorrichtung ausgeführt. Der Spalt zwischen den Fördervorrichtungen kann zwischen 2 und 200 cm, bevorzugt 5 und 100 cm, noch mehr bevorzugt 10 und 50 cm sein. Der Schacht kann entweder die komplette Breite der Transportvorrichtung oder nur einen Teil davon abdecken. Das Spinnvlies kann passiv in den Schacht und zur Zerkleinerungsvorrichtung fallen, oder aktiv durch Luftdüsen, Wasserdüsen oder andere dem Fachmann bekannten Fördervorrichtungen zur Zerkleinerungsvorrichtung gebracht werden.

Das ausgeschleuste Lösungsmittelbeladene Spinnvlies kann wiederverwertet werden. Dazu kann eine Zerkleinerungsvorrichtung vorgesehen sein, wobei der Eingang der Zerkleinerungsvorrichtung mit der Ausschleusvorrichtung verbunden ist. Das Lösungsmittelbeladene Spinnvlies kann dann zerkleinert werden.

In einer Ausführungsvariante ist vorgesehen, dass der Ausgang der Zerkleinerungsvorrichtung mit der Spinnlösungsherstellung verbunden ist. In diesem Fall kann das zerkleinerte Material wieder dem Spinnvliesprozess zugeführt werden.

Gegebenenfalls kann zwischen Zerkleinerungsvorrichtung und Spinnlösungsherstellung eine weitere Ausschleusvorrichtung vorgesehen sein. In diesem Fall kann eine zu große Menge an zerkleinertem Material zurückgehalten oder verunreinigtes Material gänzlich ausgeschieden werden.

Bevorzugt ist vorgesehen, dass zwischen Zerkleinerungsvorrichtung und Spinnlösungsherstellung ein Suspensionsbehälter vorgesehen ist. So kann das zerkleinerte Material ideal für den nächsten Spinnprozess vorbereitet werden.

Die Positionen zum Ausschleusen von Spinnvlies können sich nach dem Spinnsystem, nach dem Ablageförderband, nach der Wäsche, nach der Verfestigung und nach dem Trockner befinden, um beispielsweise Randschnittmaterial wieder für die Spinnmasseherstellung zu verwenden.

Es können jeder Ausschleusvorrichtung zumindest eine Zerkleinerungsvorrichtung und ein Suspensionsbehälter nachgeschaltet sein. Je nach Anlagendesign sind weitere Ausführungsvarianten möglich.

Das ausgeschleuste Spinnvlies kann auch von mehreren Ausschleusvorrichtungen über Fördervorrichtungen zu einer Zerkleinerungsvorrichtung transportiert werden.

Die Zerkleinerungsvorrichtung kann einen Suspensionsbehälter oder mehrere Suspensionsbehälter aufweisen, die abwechselnd befüllt werden. Somit können die Suspensionsbehälter je nach anlagentechnischer Ausführung entweder kontinuierlich oder diskontinuierlich betrieben werden. Eine Suspensionspumpe kann die Suspension weiterführen.

Für niedrige Cellulosegehalte kann die Suspensionspumpe beispielsweise als Zahnradpumpe, oder Schneckenradpumpe ausgeführt sein. Bei hohen Cellulosegehalten kann beispielsweise für die Dosierung der rückgewonnenen Cellulose zur erneuten Spinnmasseherstellung auch eine Förderschnecke, Dosierschnecke, ein Förderband oder eine Dosierbandwaage verwendet werden

Der Ausschleusvorgang kann bei Vliestransportgeschwindigkeiten zwischen 5 und 1000 m/min, bevorzugt 10 und 500 m/min, noch mehr bevorzugt zwischen 15 und 250 m/min erfolgen.

Die Fördervorrichtungen können auch rotierende Walzen oder Trommeln sein. Die Ausschleusvorrichtungen werden je nach Layout der Transportvorrichtung dementsprechend angepasst, dass das Spinnvlies an diesen Stellen ausgeschleust und das erfindungsgemäße Verfahren realisiert werden kann.

Hinsichtlich des Verfahrens kann außerdem vorgesehen sein, dass das ausgeschleuste Spinnvlies bevor es der Spinnlösungsherstellung zugeführt wird, nochmal suspendiert und mit frischen Zellstoff und frischem Lösungsmittel gemischt wird.

Bevorzugt ist vorgesehen, dass das zerkleinerte Spinnvlies bevor es der Spinnlösungsherstellung zugeführt wird, mit Lösungsmittel versetzt wird. Überaschenderweise konnte die hergestellte Suspension sogar direkt der Spinnmasseherstellung zugeführt werden und somit das bereits verwendet NMMO und die bereits zu Spinnvlies verarbeitete Cellulose wieder zu Spinnmasse gelöst und versponnen werden, ohne das Einschränkungen bei der Spinnbarkeit oder den Produkteigenschaften sichtbar waren.

Das erfindungsgemäße Verfahren kann bei der Herstellung cellulosischer Spinnvliese verwendet werden um die verwendeten Lösungsmittel zum Lösen der Cellulose, bspw. tertiäre Aminoxide oder ionische Flüssigkeiten zurückzugewinnen.

### Detaillierte Beschreibung der Erfindung

In der vorliegenden Erfindung wird ein Verfahren und eine Anlage bereitgestellt, die es erlauben, die Abstände bzw. Lücken zwischen zwei Anlagenteilen oder Transportvorrichtungen zum Ausschleusen von Lösungsmittelbeladenen Spinnvlies zu nutzen, das ausgeschleuste Spinnvliese zu zerkleinern, zu suspendieren und die hergestellte Suspension entweder in weiterer Folge der Lösungsmittelaufarbeitung zuzuführen oder direkt der Spinnmasseherstellung zuzugeben.

Das erfindungsgemäße Verfahren ermöglicht einen wirtschaftlich, umwelttechnisch, sicherheitstechnisch und operativ verbesserten Betrieb einer Spinnvliesanlage für die Herstellung von cellulosischen Spinnvliesen, da das Spinnvlies ausgeschleust werden kann und Einstellungen an nachgeschaltetem Equipment getätigt werden können, ohne die Spinnmasseherstellung oder das Spinnsystem abzustellen. In weiterer Folge kann das Lösungsmittel rückgewonnen und die Kontamination von nachgeschaltetem Equipment verhindert und damit Korrosions- und Brandgefahr minimiert werden.

Um die Erfindung besser zu veranschaulichen werden die wesentlichen Merkmale anhand von bevorzugten Ausführungsformen des erfindungsgemäßen Verfahrens anhand folgender Figuren dargestellt.
- Fig. 1: zeigt schematisch eine erfindungsgemäße Anlage.
- Fig. 2: zeigt die Viskosität von Spinnmasse aus frischem Zellstoff im Vergleich zu wiederverwendeter Cellulose aus Spinnvlies.

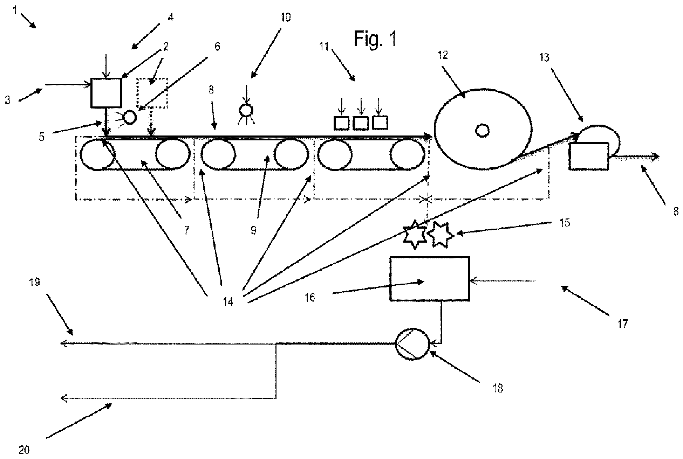

Fig. 1 zeigt eine erfindungsgemäße Anlage 1, wobei anhand der Anlage 1 auch die Verfahrensschritte erläutert werden. Durch das Spinnsystem 2 werden extrudierte und verstreckte Spinnmassefilamente 5 zu einem Spinnvlies 8 abgelegt und an mehreren Ausschleusvorrichtungen 14, durch Unterbrechung des Hauptprozessflusses, ausgeschleust. Im Normalbetrieb können die Filamente 5 mit einer Koagulationsflüssigkeit aus einer Vorrichtung 6 zur Abgabe von Koagulationsflüssigkeit besprüht werden, um die Cellulose zu regenerieren und die Form der Filamente 5 zu stabilisieren, bevor die Prozessluft 4 und die Filamente 5 auf der Transporteinrichtung 7 in Form eines Förderbands aufprallen und das Spinnvlies 8 geformt wird. Das Spinnvlies 4 wird im Hauptprozessfluss dann in einer Wascheinrichtung 10 gewaschen, gegebenenfalls in einer Verfestigungsanlage 11 verfestigt, getrocknet in der Trockeneinrichtung 12 und in der Sammelvorrichtung 13 zu Rollen aufgewickelt.

Es hat sich gezeigt, dass beim Anfahren, Abstellen oder bei Produktionsproblemen, beispielweise dem Ausfall der Vorrichtung 6 zur Abgabe von Koagulationsflüssigkeit oder der Wascheinrichtung 10, bei der Herstellung von Spinnvliesen aus Lyocell-Spinnmasse, über 500 ppm NMMO, teilweise über 5000 ppm NMMO, in extrem Fällen über 50.000 ppm NMMO im Spinnvlies zurückbleiben. Ohne das erfindungsgemäße Verfahren würde das Lösungsmittelbeladene Spinnvlies über die Verfestigungsanlage 11, die Trockeneinrichtung 12, bis Sammelvorrichtung 13 transportiert werden. Über einen längeren Zeitraum sammelt sich das NMMO im Wasserkreislauf der Verfestigungsanlage 11 und kann Korrosion der Anlagenteile und der Verfestigungsdüsen verursachen. Bei längerem Betrieb kann sich das NMMO bei der Trockeneinrichtung 12 anreichern und Brände in der Trockeneinrichtung 12 auslösen. In allen Fällen geht NMMO verloren, was neben den genannten sicherheitstechnischen Problemen, weder wirtschaftlich noch umwelttechnisch akzeptabel ist.

Es hat sich gezeigt, dass die Lösungsmittelverluste bei Produktivitäten des Spinnsystems 2 zwischen 10 kg/h/m und 1000 kg/h/m Cellulosedurchsatz so hoch sind, dass ein neues Verfahren entwickelt werden muss, um die bereits beschrieben Probleme zu lösen.

Erfindungsgemäß werden die Lücken zwischen Förderbändern 7, 9 insofern genutzt, dass Ausschleusvorrichtungen 14 (nicht näher dargestellt) installiert werden können, die ein Ausschleusen des Lösungsmittelbeladenen Spinnvlieses ermöglichen. Erfindungsgemäß ergibt sich bereits aus dem Ausschleusen aus dem Hauptprozessfluss eine höhere Flexibilität für die Anlagenbediener, da sie Tätigkeiten an nachgeschalteten Anlagenteilen durchführen können, ohne dass die Spinnlösungsherstellung 3 und das Spinnsystem 2 davor abgestellt oder eingedrosselt werden müssen.

Das ausgeschleuste Spinnvlies wird in einer Zerkleinerungsvorrichtung 15 zu Spinnvliesstücken zerkleinert und im Suspensionsbehälter 16 durch Zugabe von Flüssigkeit 17 soweit suspendiert, dass es durch beispielsweise eine Förderpumpe 18 entweder über die Leitung 19 zur NMMO-Rückgewinnung (nicht näher dargestellt) oder über eine Leitung 20 zur Spinnlösungsherstellung 3 gefördert werden kann (nicht näher dargestellt). Es hat sich gezeigt, dass das ausgeschleuste Spinnvlies durch den Zerkleinerungsschritt und das Mischen mit Flüssigkeit, zu einer transportfähigen Suspension vermengt werden können. Dieser Schritt macht die Rückgewinnung von NMMO oder die Zugabe zur Spinnlösungsherstellung erst möglich.

Die Ausschleusvorrichtungen 14 können sich nach der Spinnmasseleitung, nach dem Spinnsystem 2, vor oder nach der Transporteinrichtung 7 und vor oder nach der der Wascheinrichtung 10 zugeordneten Transporteinrichtung 9 befinden. Zusätzlich können sich Ausschleusvorrichtungen 14 zwischen der Verfestigungsanlage 11 und der Trockeneinrichtung 12 befinden. Es können auch Ausschleusvorrichtungen 14 nach der Trockeneinrichtung 12 und vor der Sammelvorrichtung 13 angeordnet sein, um Produkte mit schlechter Qualität auszuschleusen, der Rückgewinnung zuzuführen und erneut zur Spinnmasse zu verarbeiten. Je nach Prozessführung und Anlagenlayout sind auch weitere Positionen für die Auschleusvorrichtung 14 möglich. Eine Anlage 1 kann daher eine oder mehrere Ausschleusvorrichtugen 14 aufweisen. Die Feuchtebeladung der ausgeschleusten Spinnvliese pro kg Cellulose kann im Bereich der Wäsche 0,1kg/kg bis 10kg/kg und im Bereich nach der Trocknung 0 bis 4kg/kg betragen.

Über die Ausschleusvorrichtung 14 wird das ausgeschleuste Spinnvlies zur Zerkleinerungsvorrichtung 15 geführt. Die Zerkleinerungsvorrichtung 15 kann beispielsweise eine Mühle, bevorzugt eine Schneidemühle, welche 10 bis 5000 kg/h, bevorzugt 100 bis 2000 kg/h, noch mehr bevorzugt 200 bis 1 000 kg/h Spinnvlies zerkleinern kann. Die zerkleinerten Spinnvlies-Stücke liegen im Bereich von 10 µm bis 100 mm Länge, bevorzugt 0,1 mm bis 50 mm, noch mehr bevorzugt 1 mm bis 10 mm Länge. Je nach Festigkeit und gewünschtem Zerkleinerungsgrad des Spinnvlieses können auch andere dem Fachmann bekannten Zerkleinerungsvorrichtungen verwendet werden.

Die zerkleinerten Spinnvlies-Stücke werden im Suspensionsbehälter 16 mit Flüssigkeit 17 gemischt und zu einer transportfähigen Suspension vermengt. Der Suspensionsbehälter 16 kann ein Rührwerk aufweisen, um die Homogenität der Suspension zu erhöhen. In einer Ausführungsvariante kann der Suspensionsbehälter auch beheizt sein, um die Wasseraufnahme der Cellulose zu verbessern und die Quellung zu erhöhen.

Die für die Suspension verwendete Flüssigkeit 17 kann vollentsalztes Wasser oder eine Lösung aus dem für die Herstellung der Spinnmasse verwendeten Lösungsmittels und Wasser sein. Im Falle von der Spinnvliesherstellung aus Lyocell-Spinnmasse kann die Flüssigkeit 17 für die Suspension zwischen 0 und 85% NMMO, bevorzugt 10 bis 80% NMMO, noch mehr bevorzugt zwischen 20 und 78% NMMO haben. Die hergestellte Suspension hat zwischen 1 bis 95%, bevorzugt 2 bis 50%, noch mehr bevorzugt 3 bis 30% Cellulosegehalt. Da die hergestellten Suspensionen entweder zur Lösungsmittelrückgewinnung, oder als Zusatz zur Spinnmasseherstellung gepumpt werden und die Viskosität der Suspension stark vom Cellulosegehalt und der Art des Lösungsmittels abhängt, muss der Cellulosegehalt und die Konzentration des Lösungsmittels je nach Position der Ausschleusvorrichtung (Feuchtegehalt des Spinnvlieses an diesem Punkt) und Verwendung der Suspension, angepasst werden. Es hat sich gezeigt, dass der Cellulosegehalt der Suspension bevorzugt unter 20% sein sollte, wenn die Suspension zur NMMO-Rückgewinnung transportiert wird, da spätere Reinigungsschritte, die Fest/Flüssig-Trennung und in weiterer Folge die NMMO-Eindämpfung in den ohnehin vorhandenen NMMO-Aufbereitungskreisläufen des Lyocell-Prozesses besser durchgeführt werden können. Wenn die Suspension wieder für die Herstellung von Spinnmasse verwendet werden soll, sind höhere Cellulosegehalte > 20% vorteilhaft, da der Cellulosegehalt in der späteren Spinnmasse besser eingestellt werden kann.

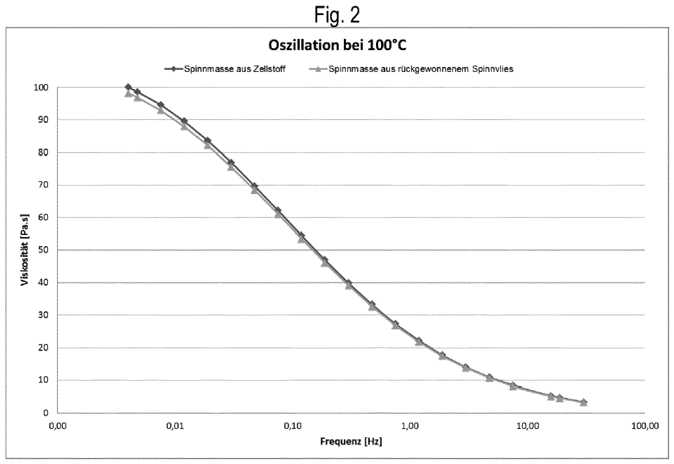

Fig. 2 zeigt, dass die Viskosität der Spinnmasse trotz des erneuten Zerkleinerns und Lösens des Spinnvlieses nur gering von der Viskosität einer Spinnmasse aus frischer Cellulose abweicht (Messung mittels Rheometer Kinexus, der Firma Malvern Messsystem CP4/40, Oszillationsmessung bei 100°C mit 0,004 und 30Hz, Auswertung mit rSpace for Kinexus, beide Proben mit gleichem Zellstoff- und Feuchtegehalt gemessen). Durch das erfindungsgemäße Verfahren können also bereits hegestellte und ausgeschleuste Spinnvliese wiederverwendet werden. Somit lassen sich beispielsweise Lyocell-Spinnmassen mit 4 bis 17% Zellstoffgehalt aus 100%, bevorzugt 1 bis 50%, noch mehr bevorzugt 2 bis 30% wiederverwendeter Cellulose aus rückgewonnenem Spinnvlies herstellen.

## Patentansprüche

1. Anlage (1) zur Herstellung von Spinnvlies (8), umfassend
• eine Spinnlösungsherstellung (3),
• ein Spinnsystem (2),
• eine Vorrichtung (6) zur Abgabe von Koagulationsflüssigkeit,
• wenigstens eine Fördereinrichtung (7,9) zur Ablage des Spinnvlieses (8) und
• eine Sammelvorrichtung (13) für das Spinnvlies (8),
**dadurch gekennzeichnet, dass** zwischen der Vorrichtung (6) zur Abgabe von Koagulationsflüssigkeit und der Sammelvorrichtung (13) für das Spinnvlies (8) zumindest eine Ausschleusvorrichtung (14) vorgesehen ist.

2. Anlage nach Anspruch 1, **dadurch gekennzeichnet, dass** die zumindest eine Ausschleusvorrichtung (14) mit der Spinnlösungsherstellung (3) leitend verbunden ist.

3. Anlage nach Anspruch 1 oder Anspruch 2, **dadurch gekennzeichnet, dass** die zumindest eine Ausschleusvorrichtung (14) an der Fördereinrichtung (7, 9) im Bereich der Ablage des Spinnvlieses (8) vorgesehen ist.

4. Anlage nach einem der Ansprüche 1 bis 3, **gekennzeichnet durch** eine Trockeneinrichtung (12), wobei zwischen der Fördereinrichtung (7, 9) und der Trockeneinrichtung (12) die wenigstens eine Ausschleusvorrichtung (14) vorgesehen ist.

5. Anlage nach einem der Ansprüche 1 bis 4, **gekennzeichnet durch** eine Trockeneinrichtung (12) und eine Sammelvorrichtung (13), wobei die wenigstens eine Ausschleusvorrichtung (14) zwischen Trockeneinrichtung (12) und Sammelvorrichtung (13) vorgesehen ist.

6. Anlage nach einem der Ansprüche 1 bis 5, **dadurch gekennzeichnet, dass** die Fördereinrichtung (7, 9) mehrteilig ist und zwischen zwei Teilen der Fördereinrichtung (7, 9) die zumindest eine Ausschleusvorrichtung (14) vorgesehen ist.

7. Anlage nach Anspruch 6, **dadurch gekennzeichnet, dass** ein Teil der Fördereinrichtung (7, 9) eine Wascheinrichtung (10) aufweist, wobei vor der Wascheinrichtung (10) die zumindest eine Ausschleusvorrichtung (14) vorgesehen ist.

8. Anlage nach Anspruch 6 oder Anspruch 7, **dadurch gekennzeichnet, dass** ein Teil der Fördereinrichtung (7, 9) eine Wascheinrichtung (10) aufweist, wobei nach der Wascheinrichtung (10) die zumindest eine Ausschleusvorrichtung (14) vorgesehen ist.

9. Anlage nach einem der Ansprüche 1 bis 8, **gekennzeichnet durch** eine Zerkleinerungsvorrichtung (15), wobei der Eingang der Zerkleinerungsvorrichtung (15) mit der zumindest einen Ausschleusvorrichtung (14) verbunden ist.

10. Anlage nach Anspruch 9, **dadurch gekennzeichnet, dass** der Ausgang der Zerkleinerungsvorrichtung (15) mit der Spinnlösungsherstellung (3) verbunden ist.

11. Anlage nach einem der Ansprüche 8 bis 10, **dadurch gekennzeichnet, dass** zwischen Zerkleinerungsvorrichtung (15) und dem Spinnlösungsherstellung (3) ein Suspensionsbehälter (16) vorgesehen ist.

12. Verfahren zur Rückgewinnung von Lösungsmittel oder Cellulose in einer Anlage (1) zur Herstellung von Spinnvlies (8), wobei aus einem Spinnsystem (2) Spinnmassefilamente (5) extrudiert, verstreckt zu einem Spinnvlies (8) abgelegt werden und später gesammelt werden, **dadurch gekennzeichnet, dass** beim Anfahren der Anlage (1), beim Abstellen der Anlage (1) oder bei Betriebsproblemen der Anlage (1) abgelegtes Spinnvlies (8) vor dem Sammeln ausgeschleust wird, wobei (a) dem ausgeschleusten Spinnvlies (8) das Lösungsmittel entzogen wird und/oder wobei (b) das ausgeschleuste Spinnvlies (8) der Spinnlösungsherstellung (3) zugeführt wird.

13. Verfahren nach Anspruch 12, **dadurch gekennzeichnet, dass** das ausgeschleuste Spinnvlies (8) bevor es der Spinnlösungsherstellung (3) zugeführt wird, zerkleinert wird.

14. Verfahren nach Anspruch 12 oder Anspruch 13, **dadurch gekennzeichnet, dass** das ausgeschleuste Spinnvlies (8) bevor es der Spinnlösungsherstellung (3) zugeführt wird, mit Lösungsmittel versetzt wird.

## Claims

1. A plant (1) for the production of spunbonded nonwoven (8), comprising
• a spinning solution production (3),
• a spinning system (2),
• a device (6) for the delivery of coagulation liquid,
• at least one conveying device (7, 9) for depositing the spunbonded nonwoven (8), and
• a collecting device (13) for the spunbonded nonwoven (8),
**characterized in that** at least one discharge device (14) is provided between the device (6) for the delivery of coagulation liquid and the collecting device (13) for the spunbonded nonwoven (8).

2. A plant according to claim 1, **characterized in that** the at least one discharge device (14) is conductively connected to the spinning solution production (3).

3. A plant according to claim 1 or claim 2, **characterized in that** the at least one discharge device (14) is provided at the conveying device (7, 9) in the area of the deposition of the spunbonded nonwoven (8).

4. A plant according to any of claims 1 to 3, **characterized by** a drying device (12), with the at least one discharge device (14) being provided between the conveying device (7, 9) and the drying device (12).

5. A plant according to any of claims 1 to 4, **characterized by** a drying device (12) and a collecting device (13), with the at least one discharge device (14) being provided between the drying device (12) and the collecting device (13).

6. A plant according to any of claims 1 to 5, **characterized in that** the conveying device (7, 9) is multipart and the at least one discharge device (14) is provided between two parts of the conveying device (7, 9).

7. A plant according to claim 6, **characterized in that** a portion of the conveying device (7, 9) comprises a washing device (10), with the at least one discharge device (14) being provided upstream of the washing device (10).

8. A plant according to claim 6, **characterized in that** a portion of the conveying device (7, 9) comprises a washing device (10), with the at least one discharge device (14) being provided downstream of the washing device (10).

9. A plant according to any of claims 1 to 8, **characterized by** a shredding device (15), wherein the input of the shredding device (15) is connected to the at least one discharge device (14).

10. A plant according to claim 9, **characterized in that** the output of the shredding device (15) is connected to the spinning solution production (3).

11. A plant according to any of claims 8 to 10, **characterized in that** a suspension container (16) is provided between the shredding device (15) and the spinning solution production (3).

12. A method of recycling solvent or cellulose in a plant (1) for the production of spunbonded nonwoven (8), wherein spinning dope filaments (5) are extruded from a spinning system (2), deposited in a drawn state to form a spunbonded nonwoven (8) and collected later, **characterized in that** spunbonded nonwoven (8) deposited during the start-up of the plant (1), during the shutdown of the plant (1) or in case of operational problems of the plant (1) is discharged prior to the collection, wherein (a) the solvent is removed from the discharged spunbonded nonwoven (8) and/or wherein (b) the discharged spunbonded nonwoven (8) is supplied to the spinning solution production (3).

13. A method according to claim 12, **characterized in that** the discharged spunbonded nonwoven (8) is shredded before it is supplied to the spinning solution production (3).

14. A method according to claim 12 or claim 13, **characterized in that** the discharged spunbonded nonwoven (8) is mixed with solvent before it is supplied to the spinning solution production (3).

## Revendications

1. Installation (1) de fabrication de tissu non-tissé (8) comprenant
• une production de solution de filage (3),
• un système de filage (2),
• un dispositif (6) d'émission de liquide de coagulation,
• au moins un système de convoyage (7, 9) pour le stockage du tissu non-tissé (8) et
• un dispositif de collecte (13) pour le tissu non-tissé (8),
**caractérisée en ce qu'**au moins un dispositif d'éjection (14) est prévu entre le dispositif (6) d'émission de liquide de coagulation et le dispositif de collecte (13) du tissu non-tissé (8).

2. Installation selon la revendication 1, **caractérisée en ce que** l'au moins un dispositif d'éjection (14) est relié de manière conductrice avec la production de solution de filage (3).

3. Installation selon la revendication 1 ou la revendication 2, **caractérisée en ce que** l'au moins un dispositif d'éjection (14) est prévu sur le système de convoyage (7, 9), dans la région de stockage du tissu non-tissé (8).

4. Installation selon une des revendications 1 à 3, **caractérisée par** un système de séchage (12), l'au moins un dispositif d'éjection (14) étant prévu entre le système de convoyage (7, 9) et le système de séchage (12).

5. Installation selon une des revendications 1 à 4, **caractérisée par** un système de séchage (12) et un dispositif de collecte (13), l'au moins un dispositif d'éjection (14) étant prévu entre le système de séchage (12) et le dispositif de collecte (13).

6. Installation selon une des revendications 1 à 5, **caractérisée en ce que** le système de convoyage (7, 9) est en plusieurs parties et que l'au moins un dispositif d'éjection (14) est prévu entre deux parties du système de convoyage (7, 9).

7. Installation selon la revendication 6, **caractérisée en ce qu'**une partie du système de convoyage (7, 9) comporte un système de lavage (10), l'au moins un dispositif d'éjection (14) étant prévu devant le système de lavage (10).

8. Installation selon une la revendication 6 ou la revendication 7, **caractérisée en ce qu'**une partie du système de convoyage (7, 9) comporte un système de lavage (10), l'au moins un dispositif d'éjection (14) étant prévu derrière le système de lavage (10).

9. Installation selon une des revendications 1 à 8, **caractérisée par** un dispositif de fragmentation (15), l'entrée du dispositif de fragmentation (15) étant reliée avec l'au moins un dispositif d'éjection (14).

10. Installation selon la revendication 9, **caractérisée en ce que** la sortie du dispositif de fragmentation (15) est reliée avec la production de solution de filage (3).

11. Installation selon une des revendications 8 à 10, **caractérisée en ce qu'**un réservoir à suspension (16) est prévu entre le dispositif de fragmentation (15) et la production de solution de filage (3).

12. Procédé de récupération de solvant ou de cellulose dans une installation (1) de fabrication de tissu non-tissé (8), selon lequel des filaments de masse de filage (5) sont extrudés d'un système de filage (2), étirés et déposés sous forme de tissu non-tissé (8) qui est ensuite collecté, **caractérisé en ce que**, lors du démarrage de l'installation (1), lors de l'arrêt de l'installation (1) ou lors de problèmes de fonctionnement de l'installation (1), le tissu non-tissé (8) déposé est éjecté avant d'être collecté, (a) le solvant étant extrait du tissu non-tissé éjecté et/ou (b) le tissu non-tissé (8) éjecté étant envoyé à la production de solution de filage (3).

13. Procédé selon la revendication 12, **caractérisé en ce que** le tissu non-tissé (8) éjecté est fragmenté avant d'être envoyé à la production de solution de filage (3).

14. Procédé selon la revendication 12 ou la revendication 13, **caractérisé en ce que** le tissu non-tissé (8) éjecté est mélangé avec du solvant avant d'être envoyé à la production de solution de filage (3).
